# EUROPEAN PATENT SPECIFICATION

(11) **EP 0 905 427 B1**
(45) Date of publication and mention of the grant of the patent: **24.03.2004**
(21) Application number: 98850144.1
(22) Date of filing: 17.09.1998
(51) Int. Cl.: F16L 9/16, F16L 11/16

(54) **Liquid- and gas-sealed tube**
Flüssigkeits- und gasdichtes Rohr
Tube étanche au liquide et au gaz

(30) Priority: 19.09.1997 SE 9703381
(43) Date of publication of application: 31.03.1999
(73) Proprietor: Nordiska Skorstensprodukter AB, 468 22 Vargön (SE)
(72) Inventor: Johnson, Jan, 468 00 Vargön (SE)
(74) Representative: Arwidi, Bengt Dr.

(56) References cited:
- FR-A- 1 433 947
- FR-A- 1 591 251
- FR-A- 2 193 952

## Description

The present invention is for a liquid- and gas-sealed spirally wound tube from metal having a creased lap joint.

Spirally wound, lap joint tube are being used for various purposes in connection with flow of air, combustion gases and other gases. Especially by combustion gases there are great variations of the temperature of the gas which often brings with it that water or other liquid is condensed from the gas. Combustion gases from combustion of, for example, oil may contain components which are part of the condensed liquid and makes this being an acid. Even if the tube itself is acid resistant leaking liquid may cause severe damages to surrounding goods. The gases may also contain harmful or poisonous components, e. g. chlorine, which may cause damages and discomfort if they leak out from the tube. These components may also be dissolved in the condensed liquid and become released at leakage.

It is also desirous that the tubes are flexible so that they may be bent and curved as required and be inserted for example into older, masonry chimney flues. In order to make this possible the tubes are corrugated and may be curved with a radius which in certain cases is just a little longer than the diameter of the tube. However, the curving may cause movements within the crease and increased risk for leakage.

A sealed tube of spirally wound, corrugated material is known from FR-A-1433947. One or both sides of the tube wall material have a coating that is applied by galvanic or other suitable means. Adjacent tube windings are joined by fusion of the coating or layer or layers at a raised temperature, i. e. using a heating furnace. The tube sections are simply overlapping with no folding or other kind of connections between tube sections and fusion of the surface layers takes place over the whole of the contacting areas.

A method for the manufacture of helically wound flexible tubes is described in FR-A-1591251. More specifically a method for making double-walled tubes by rolling several parallel bands on a mandrel is descibed. The joints are overlapping but not sealed and the use of a sealant is not mentioned.

One object of the present invention is a tube of the above mentioned art which is totally gas- and liquid sealed. Tubes according to the invention are described in the appended claims.

The invention will below be described more in detail with reference to the embodiments which are shown in the enclosed figures.
Figure 1 shows the material which is used for the production of tubes according to the invention.
Figure 2 shows a cross section of the material.
Figure 3 shows the first step of the jointing.
Figures 4 and 5 show the consecutive steps of the jointing.
Figure 6 shows in detail a creased joint.
Figure 7 shows in principle a part of the production method.

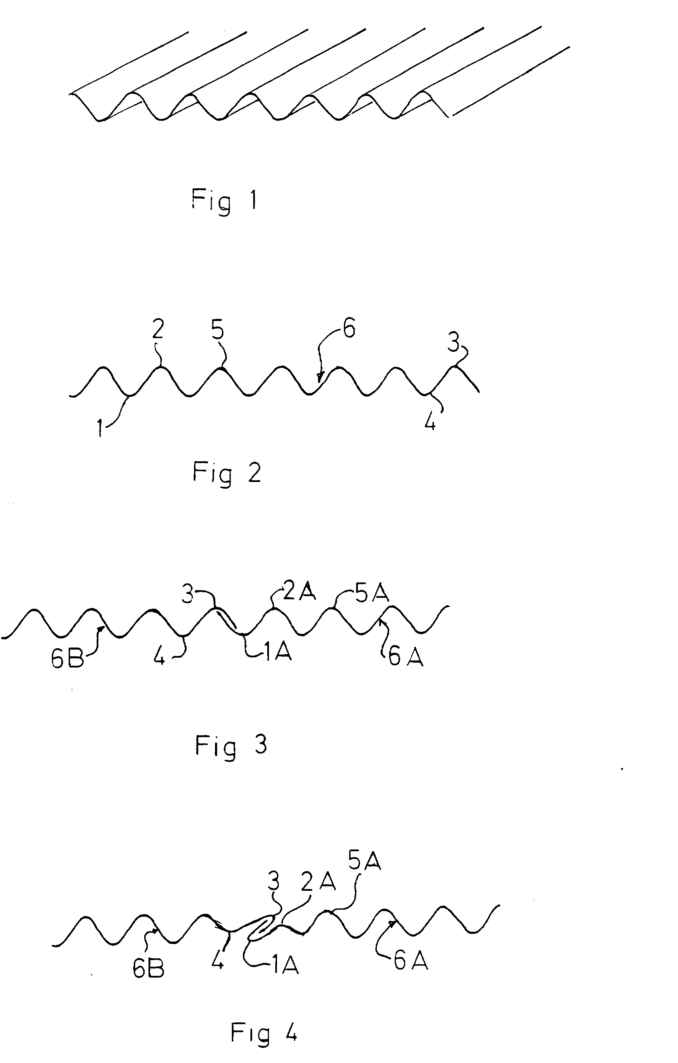

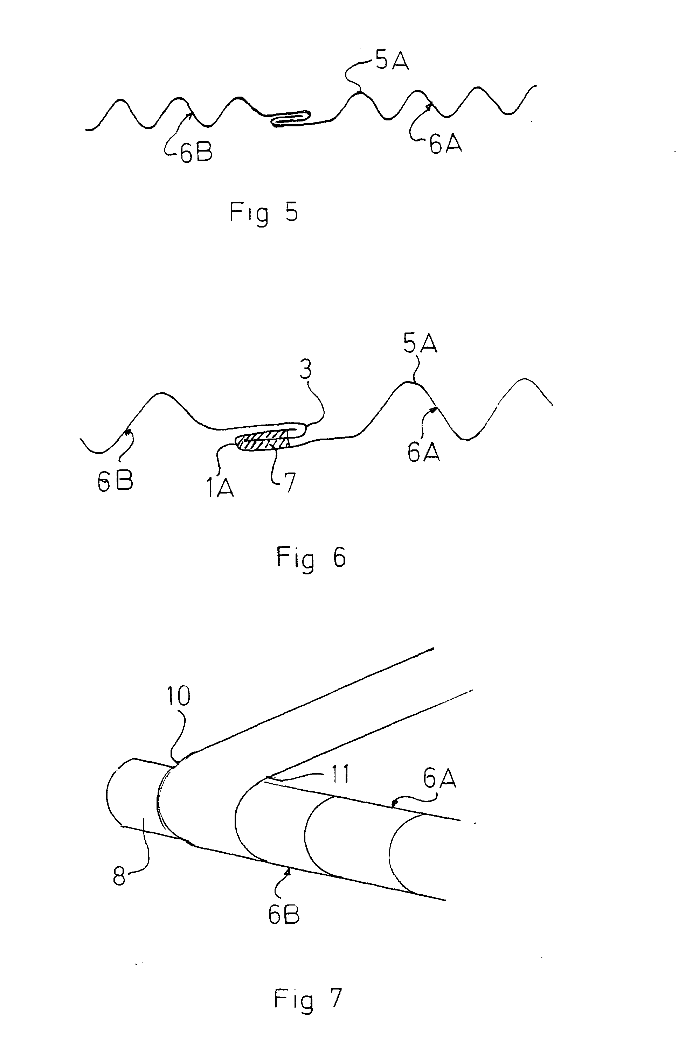

The manufacture of a tube according to the invention usually starts with a band of suitable width and thickness dimensions. The band should be as long as possible in order to avoid lengthening joints and waste of material. By means of rolling the bands 6 are corrugated to a wave-like shape and are given an appearance and a profile like that shown in figures 1 and 2, having a number of ridges and grooves. Thereupon the band is spirally wound with overlap between adjacent winding turns as shown in principle in figure 7. The adjacent turns 6A and 6B overlap each other and the overlap joint is achieved by placing together the winding turns 6A and 6B and consecutive folding and sealing according to figures 3-6. In the figures the ridges and grooves of the band at the winding turn 6B are indicated with reference numerals 2-5 and corresponding ridges and grooves at the winding turn 6A with reference numerals 2A-5A.

The edge of the winding turn 6A which protrudes from the groove 1A then extends itself into the ridge 3. At the winding around the mandrel 8 the edges of the band are folded using means which themselves do not form a part of the present invention and thus are not shown in detail in the figures. The folding is done so that the ridge 3 is folded towards the ridge 2A so that the outer edge of the turn 6B which extends itself downwards from the ridge 3, contacts the area between the ridge 2A and the groove 1A of the turn 6A. Thereupon the contacting surfaces are forced inwards towards the mandrel so that the groove 1A is situated close to the groove 4 of the turn 6B. A safe and well sealed joint is thus achieved. In order to obtain also the desired gas- and liquid-seal a sealing means 7 is also introduced. The supply of the sealing means is preferrably at the beginning of the folding around the mandrel 8, about at the position which is marked with numeral 10 in figure 7. Alternatively the sealing means may be supplied when the two winding turns meet at the position which is indicated with numeral 11. In order to achieve the desired sealing so much of the sealing means should be supplied that it at least spreads as shown in figure 6, i. e. at least one of the flanges of the crease joint is surrounded by sealing means on both sides.

The sealing means which is used is preferrably in fluid or pumpable condition and it is supplied through a die which opens close to the surface at which the sealing means is to be applied. It is also possible to use sealing means being bands or strips of a more firm material. Also in these cases the sealing means should be of such condition that it may flow out and spread in the joint. It is essential both for the method of production and the properties of the product that the sealing means adheres well to the surfaces of the band.

Other embodiments than those described above are possible within the frame of the claims. Both the spiral winding of the band and the application of the sealing means may take place in other ways than described above, with or without a mandrel for the winding.

## Claims

1. Liquid and gas sealed tube of spirally wound, corrugated material band, the band being spirally wound with overlap between adjacent winding turns (6A, 6B) **characterized** therein that said overlapping turns (6B, 6A) of the tube are joined by a creased joint and whereby the ridge 3 of the first turn 6B adjacent to the joint is folded towards the ridge 2A of the second turn 6A adjacent to the joint so that the outer edge of the turn 6B which extends itself downwards from the ridge 3 of the first turn 6B, contacts the area between the ridge 2A of the second turn 6A and the groove 1A of the second turn 6A, said groove being located between the edge of the second turn 6A and said ridge 2A, and that a sealant is applied in the creased joint.

2. Tube according to claim 1 **characterized** therein that within the creased joint the U-shaped, outer part of each tube part meshes with the corresponding, U-shaped part of the adjacent tube part.

## Patentansprüche

1. Flüssigkeits- und gasdichtes Rohr aus spiralförmigem, gewelltem Materialband, wobei das Band spiralförmig mit einer Überlappung zwischen angrenzenden Wicklungen (6A, 6B) gewickelt ist, **dadurch gekennzeichnet, dass** die genannten überlappenden Wicklungen (6B, 6A) des Rohres mittels einer gefalteten Fuge mit einander verbunden sind, wobei First 3 der an die Fuge grenzenden ersten Wicklung 6B in Richtung First 2A der an die Fuge grenzenden zweiten Wicklung 6A gefaltet ist, so dass die Aussenkante der Wicklung 6B, die sich nach unten von First 3 der ersten Wicklung 6B erstreckt, in Kontakt mit der Fläche zwischen First 2A der zweiten Wicklung 6A und der Furche 1A der zweiten Wicklung 6A ist, wobei die genannte Furche zwischen der Kante der zweiten Wicklung 6A und genanntem First 2A angeordnet ist, und dass Dichtungsmittel in der gefalteten Fuge angeordnet ist.

2. Rohr nach Anspruch 1, **dadurch gekennzeichnet, dass** in der gefalteten Fuge das U-förmige, äussere Teil jedes Rohrteils in das entsprechende U-förmige Teil den angrenzenden Rohrteils eingreift.

## Revendications

1. Tuyau étanche pour liquides et gaz fait d'un ruban de matériau ondulé enroulé en spirale, le ruban étant enroulé en spirale avec un chevauchement entre les tours d'enroulement contigus (6A, 6B), **caractérisé en ce que** lesdits tours se chevauchant (6B, 6A) du tuyau sont assemblés par un sertissage, moyennant quoi la crête (3) du premier tour (6B) contigu à l'assemblage est pliée vers la crête (2A) du second tour (6A) contigu à l'assemblage, de sorte que le bord extérieur du tour (6B), qui s'étend vers le bas à partir de la crête (3) du premier tour (6B) vient au contact de la surface entre la crête (2A) du second tour (6A) et le sillon (1A) du second tour (6A), ledit sillon étant situé entre le bord du second tour (6A) et ladite crête (2A), et **en ce que** l'on applique un produit d'étanchéité dans le sertissage.

2. Tuyau selon la revendication 1, **caractérisé en ce qu'**à l'intérieur du sertissage la partie extérieure, en forme d'U, de chaque partie de tuyau engrène avec la partie en forme d'U correspondante de la partie de tuyau contiguë.
